# EUROPÄISCHE PATENTANMELDUNG

(11) **EP 1 179 882 A2**
(43) Veröffentlichungstag der Anmeldung: **13.02.2002**
(21) Anmeldenummer: 01119013.9
(22) Anmeldetag: 07.08.2001
(51) Int. Cl.: H02K 5/02, H02K 5/04

(54) **Motorteil, insbesondere Stator und/oder Rotor, für elektrische Antriebe und Generatoren, insbesondere zum Einsatz in der Lebensmittelindustrie**

(30) Priorität: 10.08.2000 DE 10039074
(71) Anmelder: Kienle & Spiess Stanz- und Druckgiesswerk GmbH, 74343 Sachsenheim (DE)
(72) Erfinder: Hörer, Andreas, 71732 Tamm (DE)
(74) Vertreter: Jackisch-Kohl, Anna-Katharina

(57) **Zusammenfassung**

Das Motorteil hat einen Stator- und einen Rotorteil (9), das von einem Gehäuse (5) umgeben ist. Das Gehäuse (5) besteht aus Grauguß, Druckguß oder Automatenstahl. Um das Motorteil so auszubilden, daß das Gehäuse (5) auf einfache und zuverlässige Weise gegen Korrosion und Beschädigung geschützt und problemlos gereinigt werden kann, besteht das Gehäuse (5) aus einem korrosionsbeständigen, gegen Reinigungsmittel resistenten Material und es weist eine glatte Außenfläche auf. Das Gehäuse (5) kann mühelos sauber gereinigt werden. Die häufig aggressiven Reinigungszusätze führen zu keiner Beschädigung des Gehäuses, da es aus entsprechend resistentem Material besteht.

## Beschreibung

Die Erfindung betrifft ein Motorteil, insbesondere einen Stator und/oder eine Rotor, für elektrische Antriebe und Generatoren, insbesondere zum Einsatz in der Lebensmittelindustrie, nach dem Oberbegriff des Anspruches 1.

In der Lebensmittelindustrie ist es erforderlich, alle Einrichtungen, wie Förderbänder, Sägen, Kühlaggregate und dergleichen, aus hygienischen Gründen mindestens einmal täglich zu reinigen. Hierzu werden üblicherweise Hochdruckdampfstrahlgeräte mit Reinigungszusätzen verwendet, die häufig sehr aggressiv sind. Für die in der Lebensmittelindustrie verwendeten Elektromotoren werden Motorgehäuse aus Grauguß, Druckguß, z.B. Aluminium oder Aluminiumlegierungen, oder Automatenstahl verwendet. Solche Werkstoffe neigen relativ leicht zur Korrosion. Selbst bei einer Beschichtung dieser Gehäuse können dünne Risse auftreten oder kann die Oberfläche relativ schnell aufrauhen, so daß sich dort leicht Keime festsetzen. Es besteht außerdem die Gefahr, daß sich eine solche Beschichtung von der Gehäuseoberfläche ablöst und es daher zu Verunreinigungen in den Lebensmitteln kommt.

Der Erfindung liegt die Aufgabe zugrunde, das gattungsgemäße Motorteil, insbesondere einen Stator und/oder einen Rotor so auszubilden, daß das Gehäuse auf einfache und zuverlässige Weise gegen Korrosion und Beschädigung geschützt und problemlos gereinigt werden kann.

Diese Aufgabe wird bei einem gattungsgemäßen Motorteil erfindungsgemäß mit den kennzeichnenden Merkmalen des Anspruches 1 gelöst.

Infolge der erfindungsgemäßen Ausbildung ist die Außenseite des Gehäuses glatt, so daß es mühelos sauber gereinigt werden kann. Die häufig aggressiven Reinigungszusätze führen zu keiner Beschädigung des Gehäuses, da es aus entsprechend resistentem Material besteht.

Bei einer Ausbildung entsprechend Anspruch 7 können beispielsweise zur Befestigung von Lagerschilden am erfindungsgemäßen Motorteil notwendige Zuganker, Schrauben oder dergleichen durch den Bereich des Zwischenelementes verlaufen. Das Motorteil kann dadurch in üblicher Form ausgebildet sein. Insbesondere muß es nicht mit Durchgängen für solche Befestigungsteile versehen sein. Dadurch wird das Motorteil, das vorzugsweise ein Motorteilpaket ist, nicht magnetisch geschwächt. Auch wird die Gestaltung des Wickelkopfes der am Motorteil anzubringenden Wicklung in keiner Weise beeinträchtigt. Die Befestigungsteile werden vom Gehäuse umgeben, so daß sie die Reinigung nicht beeinträchtigen.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben.

Es zeigt:
- Fig. 1: einen Elektromotor mit einem erfindungsgemäßen, als Stator ausgebildeten Motorteil in Explosionsdarstellung,
- Fig. 2: den Stator nach Fig. 1 in perspektivischer und vergrößerter Darstellung,
- Fig. 3: eine zweite Ausführungsform eines erfindungsgemäßen, als Stator ausgebildeten Motorteils in Stirnansicht gemäß Pfeil III in Fig. 2,
- Fig. 4: einen Schnitt längs der Linie IV - IV in Fig. 3,
- Fig. 5: einen Elektromotor mit einem Stator gemäß Fig. 2 im Axialschnitt,
- Fig. 6: eine dritte Ausführungsform eines erfindungsgemäßen, als Stator ausgebildeten Motorteils in einer Darstellung entsprechend Fig. 2,
- Fig. 7: eine vierte Ausführungsform eines erfindungsgemäßen, als Stator ausgebildeten Motorteils in einer Darstellung entsprechend Fig. 2,
- Fig. 8 bis Fig. 11: jeweils eine weitere Ausführungsform eines erfindungsgemäßen, als Stator ausgebildeten Motorteils in einer Darstellung entsprechend Fig. 7,
- Fig. 12: ein weiteres erfindungsgemäßes, als Stator ausgebildetes Motorteil in Explosionsdarstellung.
- Fig. 13: ein weiteres erfindungsgemäßes, als Stator ausgebildetes Motorteil in einer Darstellung entsprechend Fig. 2,
- Fig. 14: ein erfindungsgemäßes, als Rotor ausgebildetes Motorteil in perspektivischer Darstellung.

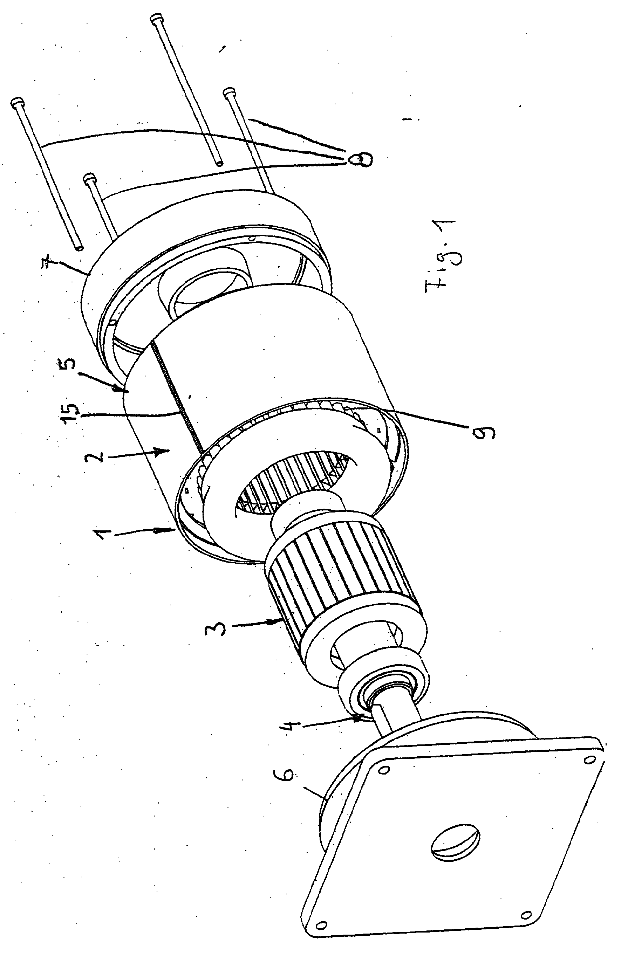

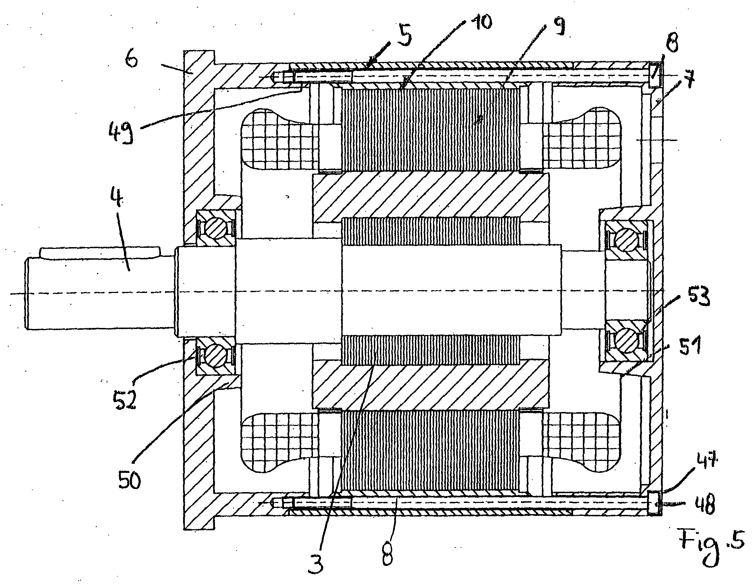

Fig. 1 zeigt einen Elektromotor 1, der vorzugsweise in der Lebensmittelindustrie verwendet wird. Er weist einen Stator 2 mit einem Statorpaket 9 auf, der in bekannter Weise einen Rotor 3 mit einer Antriebswelle 4 umgibt. Der Stator 2 ist in einem Gehäuse 5 untergebracht, an dessen beiden Stirnseiten jeweils ein napfförmiges Lagerschild 6, 7 mit Befestigungsteilen 8, wie Schrauben oder Zuganker, befestigt ist. Die beiden Lagerschilde 6, 7 sind mit zentrischen Ringen 50, 51 (Fig. 1 und 5) versehen, die Lager 52, 53, im Ausführungsbeispiel Wälzlager, aufnehmen, mit denen die Antriebswelle 4 drehbar abgestützt wird.

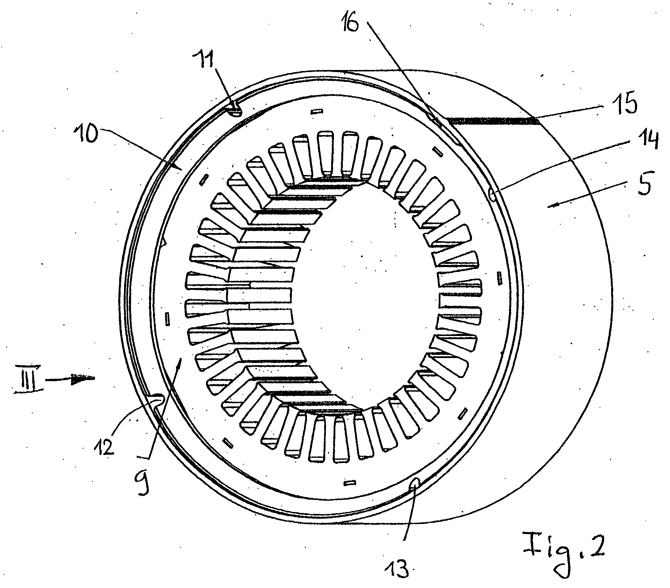

Das Statorpaket 9 besteht aus ringförmigen Blechlamellen, die in bekannter Weise zusammengefügt sind. Die Blechlamellen sind an der Innenseite mit über ihren Umfang vorzugsweise gleichmäßig verteilt angeordneten Nuten 46 (Fig. 2) zur Aufnahme der (nicht dargestellten) Wicklung versehen. Das Statorpaket 9 ist von einer Ummantelung 10 umgeben, die aus gegossenem Aluminium besteht und das Statorpaket über dessen gesamte Länge umgibt. Die Ummantelung 10 ist ihrerseits vom Gehäuse 5 umgeben, das aus Edelstahl besteht, insbesondere aus V2A-Stahl. Das Gehäuse 5 kann aber auch aus einem wärmebeständigen und gegen Reinigungsmittel resistenten Kunststoff bestehen, wie Polybutylenterephthalat (PBT), Polyoxymethylen (POM), Polytetrafluorethylen (PTFE), oder anderen Materialien, z.B. beschichteter Stahl, lackierter, eloxierter oder galvanisierter Stahl und dergleichen.

Das Statorpaket 9 kann genietet, geschweißt, geklammert, stanzpaketiert und dergleichen sein. Das Statorpaket 9 kann aber auch aus lose geschichteten Blechlamellen bestehen. Die Ummantelung 10 hat im Ausführungsbeispiel kreisförmigen Querschnitt. Sie kann selbstverständlich auch jeden anderen geeigneten Querschnitt haben. Aufgrund der guten Dehnbarkeit eignet sich für die Ummantelung 10 vorzugsweise Reinaluminium mit einer Reinheit von mehr als 98%. Es sind aber auch Aluminiumlegierungen geeignet, z.B. ENAB - Al-Si12Cu1 (Fe). Die aus Aluminium oder einer Aluminiumlegierung bestehende Ummantelung 10 ist bezüglich der Wärmeübertragung bzw. Wärmeaufnahmefähigkeit optimal und dient beim Betrieb des Elektromotors 1 teilweise als Wärmespeicher. Für die Ummantelung 10 können auch andere Werkstoffe bzw. Legierungen mit gleichen oder ähnlichen Eigenschaften eingesetzt werden, zum Beispiel Magnesium bzw. Magnesiumlegierungen.

Die Ummantelung 10 kann auch aus Zink, Messing und dergleichen bestehen.

Die Ummantelung 10 hat eine solche Dicke, daß in ihr außenseitig Vertiefungen 11 bis 14 für die Befestigungsteile 8 vorgesehen werden können. Bei der Ausführungsform gemäß den Fig. 1, 2 und 5 sind die Vertiefungen 11 bis 14 etwa 4 mm tief und als randoffene Axialnuten gebildet, die sich über die ganze Länge der Ummantelung 10 erstrekken und gleichen umfangsseitigen Abstand voneinander haben. Vorzugsweise ragt die Ummantelung 10 über das Statorpaket 9 axial vor und weist dort einen angegossenen (nicht dargestellten) Bund auf, an dem sich das Gehäuse 5 abstützt. Dadurch kann auf einfache Weise eine Zentrierung beim Anbau der stirnseitigen Lagerschilde 6, 7 erreicht werden. Dadurch wird auch die Krafteinleitung in das Statorpaket 9 über diesen Bund verbessert.

Die Ummantelung 10 hat eine solche Dicke, daß die umfangsseitigen Vertiefungen 11 bis 14 nicht bis zum Statorpaket 9 reichen. Die Vertiefungen 11 bis 14 werden durch das Gehäuse 5 außenseitig geschlossen. Durch die Vertiefungen 11 bis 14 ragen die Befestigungsteile 8, mit denen die beiden Lagerschilde 6, 7 gegen das Gehäuse 5 gezogen werden (Fig. 5). Das Lagerschild 7 hat randseitige Vertiefungen 47 zur Aufnahme der Köpfe 48 der Befestigungsschrauben 8, die in stirnseitige Gewindebohrungen 49 des Lagerschildes 6 geschraubt werden.

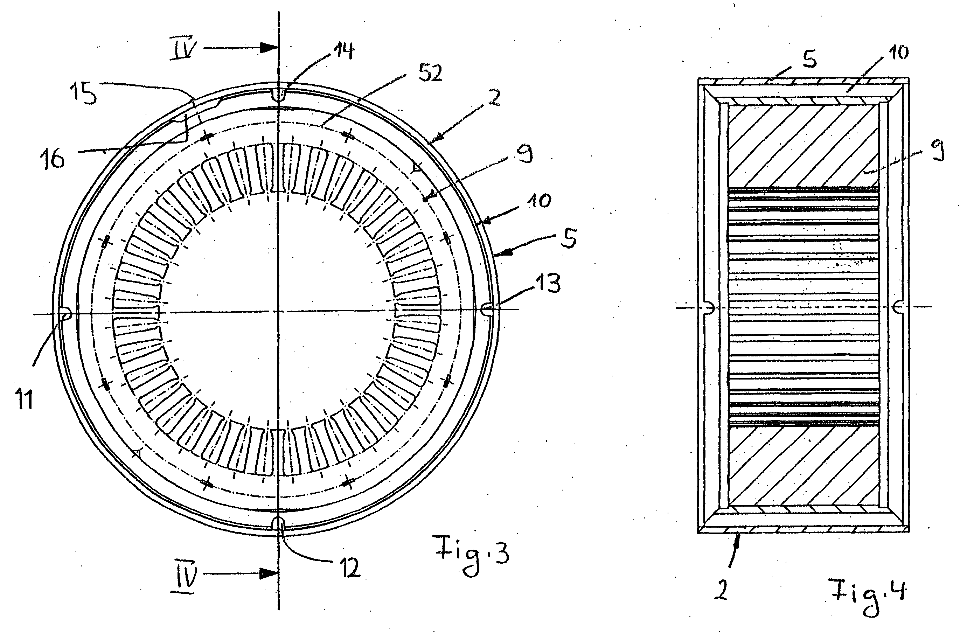

Das Gehäuse 5 wird bevorzugt aus einem Edelstahlblech hergestellt, das um die Ummantelung 10 gelegt wird. An der Stoßstelle des Edelstahlbleches erfolgt eine Verschweißung, so daß das Gehäuse 5 an dieser Stelle mit einer Schweißnaht 15 versehen ist. Damit die Verschweißung ohne übermäßige Wärmeübertragung auf die Ummantelung 10 durchgeführt werden kann, ist sie in Höhe der Schweißnaht 15 mit einer Aussparung 16 versehen, die in Umfangsrichtung der Ummantelung breiter ist als die Schweißnaht 15 (Fig. 3).

Die Umrißform des Gehäuses 5 richtet sich vorteilhaft nach der Umrißform der Ummantelung 10. Im Ausführungsbeispiel ist das Gehäuse 15 zylindrisch ausgebildet und liegt vorteilhaft unter Spannung an der Ummantelung 10 an.

Aufgrund der beschriebenen Ausbildung kann für den Stator 2 ein herkömmliches Blechpaket 9 eingesetzt werden. Dadurch sind an den Stanzwerkzeugen keine nachträglichen Einbauten erforderlich. Das Statorpaket 9 kann aus elektrischen Gründen mit seiner vollen Rükkenstärke 54 (Fig. 3) verwendet werden, da keine Flußverengungen aufgrund möglicher Engstellen auftreten. Da die Befestigungsschrauben 8 das Statorpaket 9 nicht durchsetzen, kann für den Stator 2 die herkömmliche Wickelkopfausformung, wie sie beispielshaft in Fig. 5 dargestellt ist, eingesetzt werden. Der Kunde kann darum seine bisher schon eingesetzte Wickelmaschine verwenden, so daß er keine Werkzeugkosteninvestitionen tätigen muß.

Das Gehäuse 5 hat eine sehr glatte Oberfläche, die einfach und wirkungsvoll gereinigt werden kann. Darum ist der Elektromotor hervorragend für den Einsatz überall dort geeignet, wo sehr hohe Anforderungen an die Sauberkeit der Außenseiten der Elektromotoren gestellt werden, um beispielsweise Verkeimungen auszuschließen, z.B. in der Lebensmittelindustrie, chemischen Industrie, Pharmaindustrie oder dergleichen.

Die Ausführungsform gemäß den Fig. 3 und 4 unterscheidet sich von der Ausführungsform nach den Fig. 1, 2 und 5 nur dadurch, daß der Stator 2 und damit das Statorpaket 9, die Ummantelung 10 und das Gehäuse 5 kürzer sind als bei der Ausführungsform nach den Fig. 1, 2 und 5.

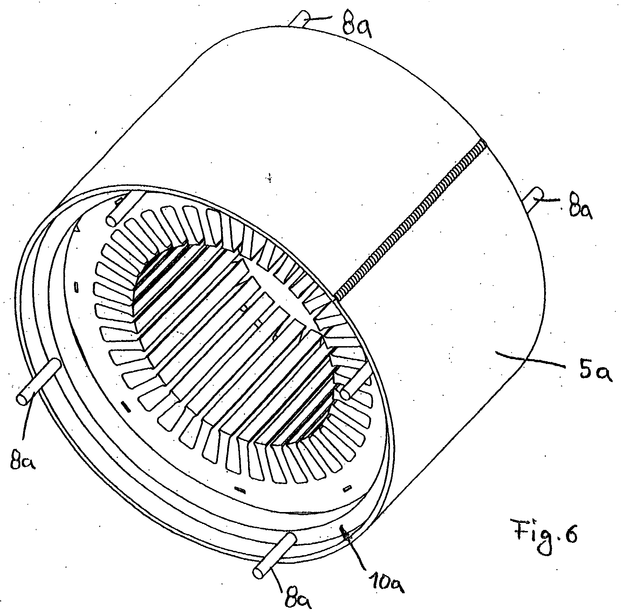

Bei der Ausführungsform nach Fig. 6 sind in die Stirnseiten der Ummantelung 10a Einlegeteile 8a eingesetzt, die im Ausführungsbeispiel als Stehbolzen ausgebildet sind. Sie ragen über die Stirnseiten sowie über das Gehäuse 5a. Im übrigen ist dieses Ausführungsbeispiel gleich ausgebildet wie die vorigen Ausführungsformen. Als Einlegeteile 8a können auch Muttern verwendet werden, in die lagerschildseitige Bolzen geschraubt werden.

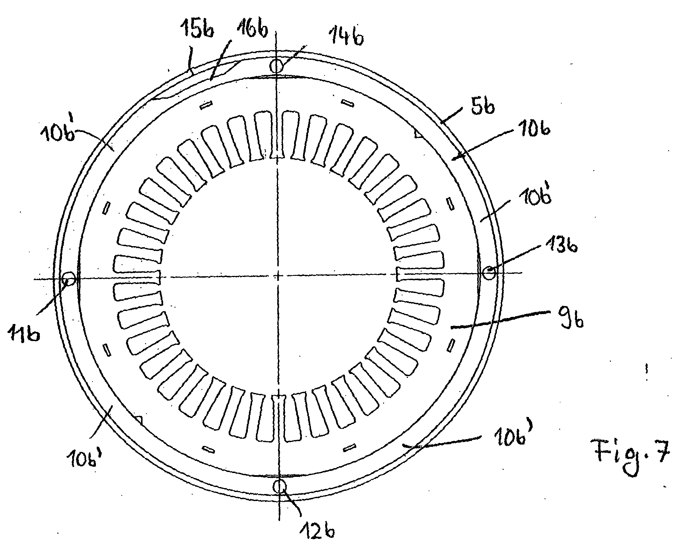

Fig. 7 zeigt eine Ausführungsform, bei der die Ummantelung 10b aus mehreren, im Ausführungsbeispiel vier Teilschalen 10b' besteht, die sich jeweils über 90° erstrecken und mit ihren jeweiligen Enden aneinander liegen. Die Teilschalen 10b' liegen am Statorpaket 9b an und umgeben es vollständig. Die Ummantelung 10b ist mit den Durchgangsöffnungen 11b bis 14b für die (nicht dargestellten) Befestigungsteile versehen. In Höhe der Schweißnaht 15b des Gehäuses 5b ist die Ummantelung 10b außenseitig mit der Aussparung bzw. Vertiefung 16b versehen.

Die Teilschalen 10b' können durch Umgießen des Statorpaketes 9b hergestellt werden. Als Gußmaterialen kommen zum Beispiel Aluminium, Zink, Messing oder andere Werkstoffe in Betracht.

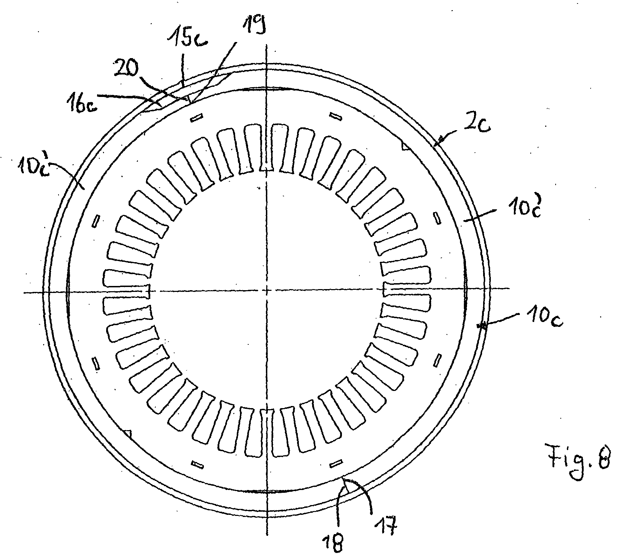

Der Stator 2c gemäß Fig. 8 hat eine Ummantelung 10c, die aus zwei halbkreisförmigen Teilschalen 10c' besteht, die mit ihren Enden 17, 18 und 19, 20 aneinander liegen und am Statorpaket 9c anliegen. Die Teilschalen 10c' können wie bei der vorigen Ausführungsform um das Statorpaket 9c gegossen sein. Als Gußmaterial kommt bevorzugt Aluminium in Betracht. Es können aber auch Zink, Messing oder ein anderer geeigneter Gußwerkstoff eingesetzt werden. In Höhe der Enden 19, 20 ist die Ummantelung 10c in Höhe der Schweißnaht 15c des Gehäuses 5c mit der Vertiefung 16c versehen. Die Stoßfuge 19, 20 der Teilschalen 10c' liegt in halber Breite der Vertiefung 16c.

Die Teilschalen 10c' werden vom Kunden mit den entsprechenden Durchgangsöffnungen für die Befestigungsteile 8 versehen. Die Durchgangsöffnungen oder die umfangsseitigen Vertiefungen für die Befestigungsteile können auch bereits bei der Herstellung der Teilschalen 10c' vorgesehen werden.

Der Stator 2d gemäß Fig. 9 unterscheidet sich vom Stator 2c nach Fig. 8 nur dadurch, daß die das Statorpaket 9d umgebende Ummantelung 10d aus vier Teilschalen 10d' besteht. Sie liegen in Umfangsrichtung des Stators 2e mit vorzugsweise gleichem Abstand nebeneinander. Die eine Teilschale 10d weist die unterhalb der Schweißnaht 15d des Gehäuses 5d liegende außenseitige Vertiefung 16d auf. Die Zwischenräume 21 bis 24, die in Umfangsrichtung von den benachbarten Längsrändern 25, 26; 27, 28; 29, 30; 31, 32 der Teilschalen 10d' begrenzt werden, bilden Kanäle, durch die Wasser, Öl, Luft oder dergleichen zur Durchflußkühlung strömen kann. Im übrigen ist diese Ausführungform gleich ausgebildet wie das vorige Ausführungsbeispiel.

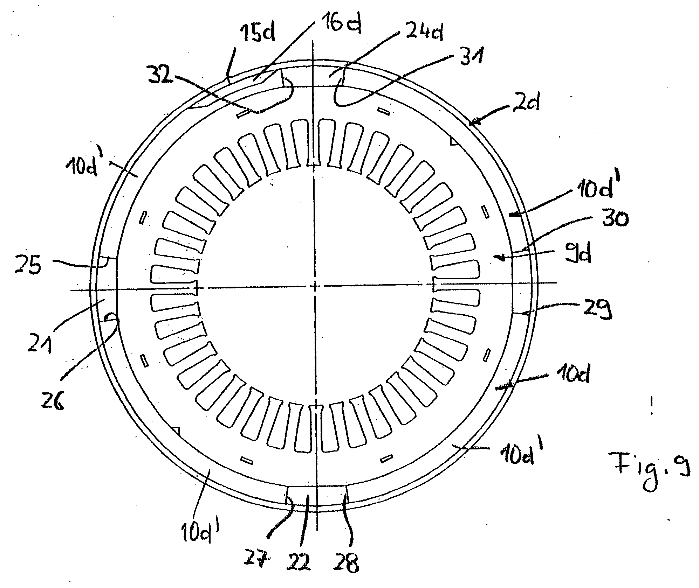

Bei den Ausführungsformen nach den Fig. 10 bis 12 sind die Ummantelungen 10e bis 10g so profiliert ausgebildet, daß axiale Durchgänge für ein Kühlmedium gebildet werden.

Die Ummantelung 10e ist in Umfangsrichtung mäanderförmig profiliert. Sie erstreckt sich wie bei den vorigen Ausführungsbeispielen zumindest über die Länge des Statorpaketes 9e. Die Profilierung ist so ausgebildet, daß die Ummantelung am Statorpaket 9e und am Gehäuse 5e anliegt. Sie bildet somit auch einen Abstandhalter, mit dem das Gehäuse 5e auf Abstand zum Statorpaket 9e gehalten wird. Aufgrund der mäanderförmigen Profilierung werden zwischen dem Statorpaket 9e und der Ummantelung 10e sowie zwischen ihr und dem Gehäuse 5e jeweils versetzt zueinander liegende axiale Längskanäle 33, 34 gebildet. Die Ummantelung 10e wird durch ein entsprechend gebogenes Blech gebildet, das vorteilhaft aus Aluminium besteht, aber auch aus Stahl, Zink, Messing und dergleichen hergestellt sein kann.

Durch die Längskanäle 33, 34 lassen sich ohne weiteres die Befestigungsteile 8 stecken. Im übrigen ist diese Ausführungsform gleich ausgebildet wie die vorigen Ausführungsbeispiele.

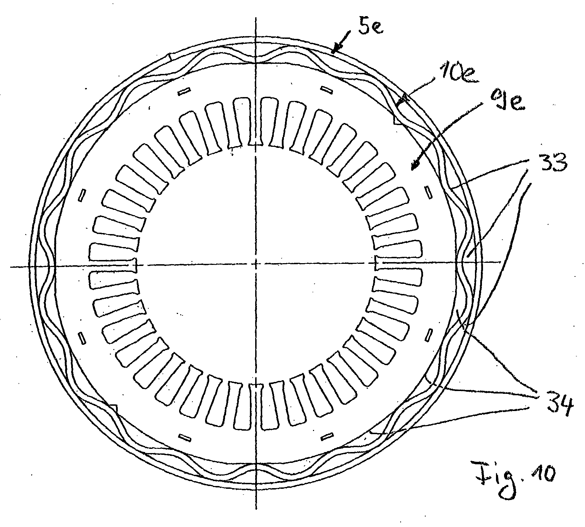

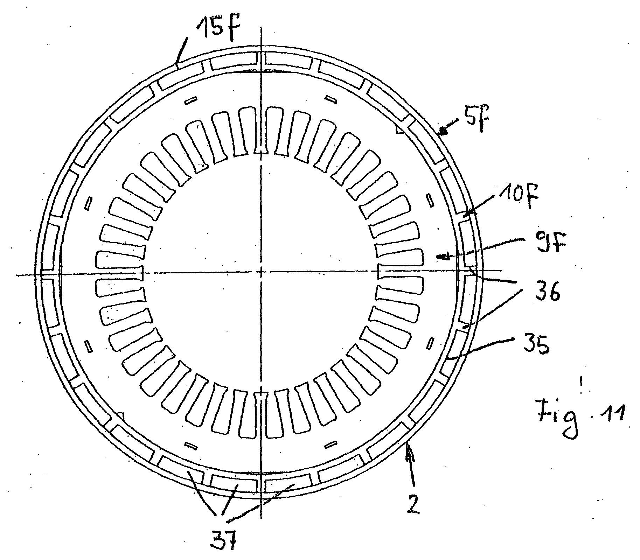

Die Ummantelung 10f gemäß Fig. 11 hat an ihrer äußeren Mantelfläche 35 radial abstehende Rippen 36, die sich vorteilhaft axial über die Länge der Ummantelung 10f erstrecken. Sie liegt am Statorpaket 9f an. Das Gehäuse 5f liegt an den freien Stirnseiten der Rippen 34 an und wird durch sie auf Abstand zum Statorpaket 9f gehalten. Die Rippen 36 sind über den Umfang der Ummantelung 10f gleichmäßig verteilt angeordnet und begrenzen jeweils axiale Kanäle 37, die radial nach innen durch die Ummantelung 10f und radial nach außen durch das Gehäuse 5f geschlossen sind. Die Schweißnaht 15f des Gehäuses 5f liegt in Höhe einer dieser Kanäle 37.

Die (nicht dargestellten) Befestigungsteile 8 lassen sich leicht durch die entsprechenden Kanäle 37 stecken, die auch als Durchflußkanäle für Kühlmedien verwendet werden können, mit denen der Elektromotor gekühlt wird.

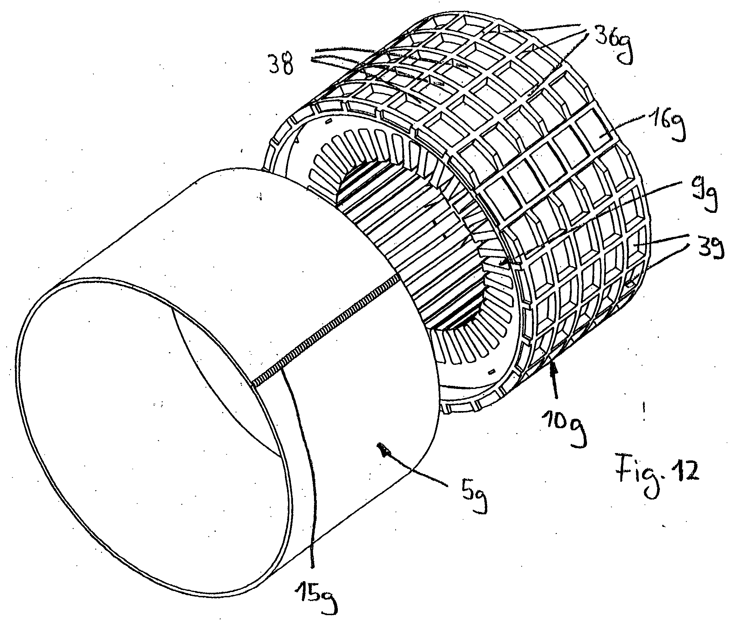

Beim Ausführungsbeispiel nach Fig. 12 hat die Ummantelung 10g nicht nur die axial verlaufenden Rippen 36g, sondern auch in Umfangsrichtung sich erstreckende Rippen 38. Die einander senkrecht kreuzenden, gleich hohen Rippen 36g, 38 bilden eine wabenförmige Struktur. Die Rippen 36g, 38 begrenzen rechteckförmige Vertiefungen 39 und bilden wie bei der vorigen Ausführungsform Abstandhalter, an denen das Gehäuse 5g anliegt.

In Höhe der Schweißnaht 15g des Gehäuses 5g ist die Ummantelung mit der Vertiefung 16g versehen, in deren Bereich die Rippen 36g, 38 nur wenig über die Ummantelung 10g ragen oder gar nicht vorgesehen sind.

Wie beim vorigen Ausführungsbeispiel sind die Rippen 36g, 38 einstückig mit der Ummantelung 10g ausgebildet, die vorteilhaft um das Statorpaket 9g gegossen wird.

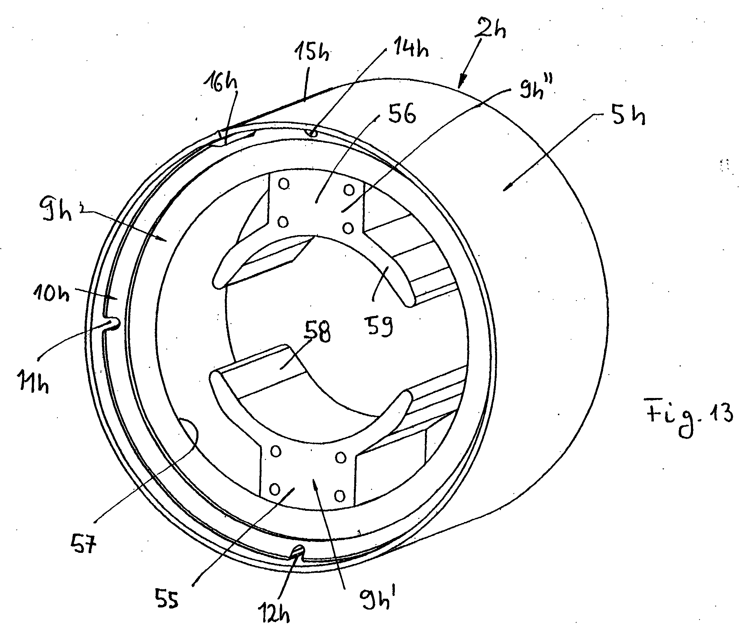

Fig. 13 zeigt ein weiteres Ausführungsbeispiel eines Stators 2h. Er unterscheidet sich vom Stator 2 nach Fig. 2 im wesentlichen nur dadurch, daß anstelle des Statorpaketes 9 ein Rückschlußjoch 9h mit zwei Polpaketen 9h' und 9h" vorgesehen sind. Sie liegen einander diametral gegenüber. Die Polpakete 9h' und 9h" sind gleich ausgebildet. Sie haben etwa Y-Form und schließen mit ihren radial verlaufenden Stegen 55 und 56 an die zylindrische Innenseite 57 des Rückschlußjoches 9h an. Die Querstege 58 und 59 der Polpakete 9h' und 9h" sind als teilkreisförmige Schalen ausgebildet, die den aufzunehmenden Rotor um mehr als dessen halben Umfang umgreifen. Im übrigen entspricht der Stator 2h dem Stator 2. Das Statorpaket 9h ist ebenfalls von einer Ummantelung 10h umgeben, die entsprechend den vorigen Ausführungsformen ausgebildet sein kann, z. B. als Umgußring aus Aluminium. Die Ummantelung 10h ist vom Gehäuse 5h umgeben. Es hat somit eine glatte, leicht zu reinigende Oberfläche. Das Gehäuse 5h ist über die Schweißnaht 15h geschlossen, die oberhalb der Aussparung 16h der Ummantelung 10h liegt. In der Ummantelung 10h sind auch die außenseitigen Vertiefungen 11h, 12h und 14h vorgesehen.

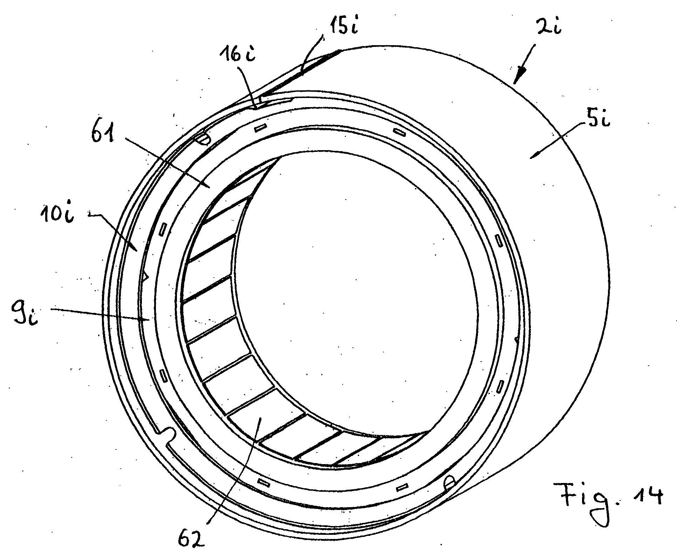

Fig. 14 zeigt einen Rotor 2i, der als Außenläufer für einen Motor dient. Der Rotor 2i hat einen Käfig 61, in dem in bekannter Weise in Umfangsrichtung hintereinander liegende, einen Kurzschlußringe bildende Magnete 62 angeordnet sind. Der Käfig 61 ist von einem Rotorpaket 9i umgeben, das seinerseits von der Ummantelung 10i umgeben ist. Sie wird ihrerseits vom Gehäuse 5i umgeben, das die Schweißnaht 15i oberhalb der Aussparung 16i in der Ummantelung 10i aufweist.

Beim Stator 2h und dem Rotor 2i können, wie bei den Ausführungsformen nach den Fig. 7 bis 12, das Gehäuse 5h, 5i und/oder die Ummantelung 10h, 10i aus zwei oder mehr Teilen bestehen. Ferner ist es möglich, die Ummantelung 10h und 10i entsprechend profiliert auszubilden, um Durchgänge für Kühlmedium zu schaffen.

Bei den beschriebenen Ausführungsbeispielen ist das Gehäuse jeweils durch ein Blech gebildet, das um die Ummantelung gebogen wird und dessen Enden miteinander verschweißt werden. Das Gehäuse kann aber auch aus einer Hülse gebildet sein, so daß eine Verschweißung nicht notwendig ist. Die Hülse kann von einem Rohr in der erforderlichen Länge abgetrennt werden. Wird die Ummantelung gegossen, kann die Hülse in die Gußform eingelegt werden, so daß die Ummantelung zwischen dem Statorpaket und der Hülse gegossen wird.

Es ist ferner möglich, die Hülse auf die Ummantelung aufzuschrumpfen. Die Ummantelung kann hierbei gegossen oder durch ein gebogenes Blech gebildet sein.

Die Teilschalen 10b', 10c', 10d' der Ummantelung 10b, 10c, 10d können aus entsprechend gewölbten Blechen hergestellt sein.

Die Teilschalen 10b', 10c', 10d' können umfangsseitig mit den Vertiefungen 11 bis 14 versehen sein, wie sie beispielsweise bei der Ausführungsform gemäß den Fig. 1, 2 und 5 vorgesehen sind.

Bei der Herstellung der als Vollring ausgebildeten Ummantelung, wie sie beispielsweise in den Fig. 1 bis 5 dargestellt ist, müssen nicht Durchgänge oder Vertiefungen für die Befestigungsteile 8 vorgesehen werden. So kann der Kunde nachträglich beispielsweise Sacklöcher zur stirnseitigen Verschraubung der Lagerschilde 6, 7 einbringen. Die Lagerschilde 6, 7 können auch auf andere Weise stirnseitig befestigt werden, beispielsweise durch Kleben, Nieten, Klipsen und dergleichen.

Bei den Ausführungsformen nach den Fig. 10 bis 12 kann die Ummantelung 10e, 10f, 10g beispielsweise durch Verbundwerkstoffe gebildet sein.

## Patentansprüche

1. Motorteil, insbesondere Stator und/oder Rotor für elektrische Antriebe und Generatoren, insbesondere zum Einsatz in der Lebensmittelindustrie, mit einem Stator- und/oder Rotorteil, vorzugsweise einem Stator- und/oder Rotorpaket, das von einem Gehäuse umgeben ist,
**dadurch gekennzeichnet, daß** das Gehäuse (5, 5a bis 5i) aus einem korrosionsbeständigen, gegen Reinigungsmittel resistenten Material besteht und eine glatte Außenfläche aufweist.

2. Motorteil nach Anspruch 1,
**dadurch gekennzeichnet, daß** das Gehäuse (5, 5a bis 5i) aus Edelstahl, vorzugsweise V2A-Stahl, besteht.

3. Motorteil nach Anspruch 1 oder 2,
**dadurch gekennzeichnet, daß** das Gehäuse (5a bis 5i) aus einem Blech gebogen ist, dessen Enden durch eine Schweißnaht (15, 15b bis 15d; 15f; 15g; 15h; 15i) miteinander verbunden sind.

4. Motorteil nach Anspruch 1 oder 2,
**dadurch gekennzeichnet, daß** das Gehäuse (5) durch ein vorzugsweise kalibriertes Edelstahlrohr gebildet ist.

5. Motorteil nach Anspruch 1,
**dadurch gekennzeichnet, daß** das Gehäuse (5, 5a bis 5i) aus wärmebeständigem, gegen Reinigungsmittel resistentem Kunststoff besteht.

6. Motorteil nach einem der Ansprüche 1 bis 5,
**dadurch gekennzeichnet, daß** das Gehäuse (5, 5a bis 5i) das Stator- und/oder Rotorteil (9; 9b bis 9i) an wenigstens einem Ende überragt.

7. Motorteil, insbesondere nach einem der Ansprüche 1 bis 6,
**dadurch gekennzeichnet, daß** zwischen dem Gehäuse (5; 5a bis 5i) und dem Stator- und /oder Rotorteil (9; 9b bis 9i) wenigstens ein vorteilhaft aus Gußmaterial, wie Aluminium, vorzugsweise Reinaluminium, bestehendes Zwischenelement (10; 10a bis 10i) angeordnet ist.

8. Motorteil nach Anspruch 7,
**dadurch gekennzeichnet, daß** das Zwischenelement (10; 10a bis 10i) mindestens eine, vorzugsweise mehrere in Umfangsrichtung mit Abstand hintereinander liegende Ausnehmungen (11 bis 14; 11b bis 14b; 11h, 12h, 14h; 21 bis 24; 33, 34; 37) für Befestigungsteile (8) aufweist.

9. Motorteil nach Anspruch 8,
**dadurch gekennzeichnet, daß** sich die Ausnehmung (11 bis 14; 11b bis 14b; 11h, 12h, 14h; 21 bis 24; 33, 34; 37) in Achsrichtung, vorzugsweise über die gesamte Länge des Zwischeneiementes (10; 10a bis 10i) erstreckt.

10. Motorteil nach Anspruch 8 oder 9,
**dadurch gekennzeichnet, daß** die Ausnehmung (11 bis 14; 11h, 12h, 14h; 21 bis 24; 33, 34; 37) zum Gehäuse (5; 5e bis 5i) hin offen ist.

11. Motorteil nach einem der Ansprüche 7 bis 10,
**dadurch gekennzeichnet, daß** das Zwischenelement (10; 10a bis 10i) an seiner Außenseite eine Vertiefung (16; 16b bis 16d; 16f bis 16i) aufweist, die unterhalb der Schweißnaht (15; 15b bis 15d; 15f bis 15i) liegt.

12. Motorteil nach einem der Ansprüche 7 bis 11,
**dadurch gekennzeichnet, daß** das Zwischenelement (10; 10a; 10h; 10i) als Vollring ausgebildet ist, der am Stator- und/oder Rotorteil (9; 9a; 9h; 9i) anliegt.

13. Motorteil nach einem der Ansprüche 7 bis 12,
**dadurch gekennzeichnet, daß** das Zwischenelement (10b bis 10d) aus wenigstens zwei, vorteilhaft durch Umgießen des Stator- und/oder Rotorteiles (9b bis 9d) hergestellten Teilschalen (10b' bis 10d') besteht.

14. Motorteil nach Anspruch 13,
**dadurch gekennzeichnet, daß** die Teilschalen (10b' bis 10d') durch gebogene Bleche gebildet sind.

15. Motorteil nach Anspruch 13 oder 14,
**dadurch gekennzeichnet, daß** die Teilschalen (10b', 10c') zur Bildung eines Vollringes mit ihren Enden aneinander liegen.

16. Motorteil nach einem der Ansprüche 13 bis 15,
**dadurch gekennzeichnet, daß** die Teilschalen (10d') mit Abstand voneinander liegen, und daß vorteilhaft zwischen benachbarten Teilschalen (10d') Durchgangsräume (21 bis 24) gebildet sind, durch die die Befestigungsteile (8) ragen.

17. Motorteil nach Anspruch 16,
**dadurch gekennzeichnet, daß** die Durchgangsräume (21 bis 24) radial nach innen durch das Motorteil (9d) und radial nach außen durch das Gehäuse (5d) begrenzt sind.

18. Motorteil nach einem der Ansprüche 7 bis 17,
**dadurch gekennzeichnet, daß** das Zwischenelement (10d bis 10f) mindestens teilweise profiliert ausgebildet ist.

19. Motorteil nach Anspruch 18,
**dadurch gekennzeichnet, daß** das vorteilhaft am Motorteil (9e) und am Gehäuse (5e) unter Bildung der Ausnehmungen (33, 34) anliegende Zwischenelement (10e) in Umfangsrichtung mäanderförmig profiliert ist.

20. Motorteil nach Anspruch 18,
**dadurch gekennzeichnet, daß** das Zwischenelement (10f; 10g) von seiner äußeren Mantelfläche (35) abstehende Rippen (36; 36g, 38) aufweist.

21. Motorteil nach Anspruch 20,
**dadurch gekennzeichnet, daß** die Rippen (36) axial verlaufen, vorzugsweise über die ganze Länge des Zwischenelementes (10f).

22. Motorteil nach Anspruch 20 oder 21,
**dadurch gekennzeichnet, daß** die vorteilhaft parallel zueinander liegenden Rippen (36) über den Umfang des Zwischenelementes (10f) verteilt angeordnet sind.

23. Motorteil nach einem der Ansprüche 20 bis 22,
**dadurch gekennzeichnet, daß** benachbarte Rippen (36) die Ausnehmungen (37) in Umfangsrichtung des Zwischenelementes (10f) begrenzen.

24. Motorteil nach Anspruch 20,
**dadurch gekennzeichnet, daß** die Rippen (36g, 38) einander kreuzend angeordnet sind.

25. Motorteil nach einem der Ansprüche 20 bis 24,
**dadurch gekennzeichnet, daß** das Gehäuse (5f; 5g) an den Stirnseiten der Rippen (36; 36g, 38) anliegt.
